# EUROPÄISCHE PATENTSCHRIFT

(11) **EP 3 112 010 B1**
(45) Veröffentlichungstag und Bekanntmachung des Hinweises auf die Patenterteilung: **19.02.2020**
(21) Anmeldenummer: 16173456.1
(22) Anmeldetag: 08.06.2016
(51) Int. Cl.: B01D 53/44, B01D 53/96

(54) **VERFAHREN ZUR REGENERIERUNG EINES VOC-ADSORBERS**
METHOD FOR REGENERATING A VOC ADSORBER
PROCÉDÉ DE RÉGÉNÉRATION D'UN ADSORBEUR COV

(30) Priorität: 29.06.2015 DE 102015212040
(43) Veröffentlichungstag der Anmeldung: 04.01.2017
(73) Patentinhaber: E.G.O. Elektro-Gerätebau GmbH, 75038 Oberderdingen (DE)
(72) Erfinder: Gärtner, Norbert, 76275 Ettlingen (DE); Holzer, Frank, 04103 Leipzig (DE); Kopinke, Frank-Dieter, 04109 Leipzig (DE); Riffel, Michael, 75038 Oberderdingen (DE); Roland, Ulf, 04158 Leipzig (DE); Schönemann, Konrad, 75056 Sulzfeld (DE)
(74) Vertreter: Patentanwälte Ruff, Wilhelm, Beier, Dauster & Partner mbB

(56) Entgegenhaltungen:
- EP-A1- 0 742 042
- WO-A1-99/03565
- JP-A- 2004 041 847
- JP-A- 2008 253 672
- US-A- 5 426 953
- US-A1- 2004 140 194

## Beschreibung

### Anwendungsgebiet und Stand der Technik

Die Erfindung betrifft ein Verfahren zur Regenerierung eines VOC-Adsorbers.

Aus der DE 10158970 A1 ist ein Verfahren bekannt, mit dem oxidierbare Stoffe bzw. VOC-Bestandteile aus einem Luftstrom entfernt werden können. Ebenso ist daraus eine entsprechende Vorrichtung zur Durchführung dieses Verfahrens bekannt. Daraus geht hervor, insbesondere zum Entfernen oxidierbarer Stoffe aus Kabinenluft von Flugzeugen, dass in einem Schichtaufbau Adsorber, Elektroden und Barriereschicht dazwischen als Baueinheit ausgebildet sind. Dabei bilden zwei beabstandete Elektroden und eine dazwischenliegende Barriere eine Plasmaquelle mit einer dielektrischen Barrierenentladung.

Aus der JP 2004-041847 A ist ein Verfahren bekannt, um Ablagerungen bzw. Verunreinigungen als VOC-Bestandteile von einem als Rotor ausgebildeten Adsorber zu entfernen, der einen Luftstrom davon reinigt. Dabei werden Bereiche des Adsorbers in eine separate Reinigungs-Luftführung gedreht und dort mittels einer Plasmaquelle gereinigt.

Aus der JP 2008-253672 A ist ein weiteres ähnliches Verfahren bekannt, um Verunreinigungen bzw. VOC-Bestandteile zu entfernen. Dazu werden mittels einer Hochspannungsquelle und einer Entladungselektrode die VOC-Bestandteile adsorbiert und zersetzt.

Die US2004/0140194 A1 offenbart die Entfernung von Verunreinigungen mittels eines Adsorbers, der mit einer Plasmaquelle integral zusammengesetzt ist.

Aus der WO 99/03565 A1 ist ein weiteres Verfahren bekannt, um gasförmige organische Stoffe aus der Luft zu entfernen. Dazu werden unter anderem eine Mikrowelleneinheit und ein Katalysator zur Oxidation von desorbierten organischen Stoffe bzw. VOC-Bestandteilen verwendet.

### Aufgabe und Lösung

Der Erfindung liegt die Aufgabe zugrunde, ein eingangs genanntes Verfahren zu schaffen, mit dem Probleme des Stands der Technik gelöst werden können und es insbesondere möglich ist, einen VOC-Adsorber gut und einfach zu reinigen bzw. zu regenerieren sowie dessen vorteilhaften Betrieb sicherzustellen.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüchen und werden im Folgenden näher erläutert. Der Wortlaut der Ansprüche wird durch ausdrückliche Bezugnahme zum Inhalt der Beschreibung gemacht.

Es ist vorgesehen, dass ein VOC-Adsorber integral mit mindestens einer Plasmaquelle als Baueinheit ausgebildet ist. Dabei wird der Adsorber von einem gesteuerten Luftstrom durchströmt. Dieser Luftstrom kann unter Umständen auch durch einen zur Adsorbervorrichtung selbst gehörenden Lüfter oder Ventilator gesteuert werden. In einer Adsorber-Phase bzw. einem Filter-Betrieb als Betriebs-Phase wird der Luftstrom durch den Adsorber gereinigt, indem sich verschiedene Stoffe, insbesondere gasförmige organische Stoffe, sogenannte volatile organic compounds (VOC) sowie organische Feststoffe an dem als VOC-Adsorber bezeichneten Adsorber anlagern und somit aus dem Luftstrom entfernt werden. Dabei werden vorteilhaft organische Feststoffe, Partikel und Fettaerosole bereits vorher abgeschieden, üblicherweise in einem vorgeschalteten Fettabscheider. Dies ist beispielsweise bei Verwendung und Betrieb der Adsorbervorrichtung in einem Dunstabzug bzw. einer Küchenabzugshaube oder einer sonstigen Abluftvorrichtung möglich und vorteilhaft. Diese Adsorption des durchströmenden Luftstroms bzw. der darin enthaltenen Bestandteile, also im Prinzip der Filterbetrieb, erfolgt vorteilhaft kalt und somit ohne zusätzliche Einbringung von Heizenergie. Dabei steigt die Konzentration der herausgefilterten Bestandteile am VOC-Adsorber an, was sowohl dessen Durchlässigkeit einerseits als auch Adsorptionsfähigkeit andererseits über die Zeit negativ beeinträchtigt, so dass er gereinigt werden muss.

Vor dem VOC-Adsorber ist dabei ein H₂O-Adsorber angeordnet zur Adsorption von Wasser aus dem zu reinigenden Luftstrom während der Adsorption als Betriebs-Phase. Ein vorteilhaftes Merkmal der Erfindung liegt in Bezug auf die Adsorption in einer räumlich getrennten Adsorption von Wasser und VOC in jeweils eigenen Adsorbern.

Während einer Regenerierungs-Phase des VOC-Adsorbers wird Wasser aus dem H₂O-Adsorber desorbiert, vorteilhaft unterstützt bzw. verstärkt durch Aufheizen des H₂O-Adsorbers. Das so aus dem H₂O-Adsorber entfernte Wasser wird auf den nachgeschalteten VOC-Adsorber geleitet, welcher vorteilhaft baulich mit einer Plasmaquelle integriert ist. Mittels der Plasmaquelle werden dann durch plasma-chemische Wasserspaltung des der Plasmaquelle zugeführten Wassers Hydroxyl- bzw. OH-Radikale erzeugt zur verbesserten Regenerierung des VOC-Adsorbers. Die OH-Radikale werden zusätzlich zum Ozon und zu Sauerstoff-Radikalen erzeugt, so dass zusätzlich zum wenig selektiven Luftplasma ein selektiveres Wasserdampfplasma erzeugt wird. Damit kann der bei vielen Luftreinigungsprozessen unvermeidliche und oft störende Begleitstoff Wasser zum nützlichen Hilfsstoff für die Erzeugung eines hochwirksamen, nichtthermischen Plasmas umfunktionalisiert werden.

Zur Reinigung bzw. Regenerierung des VOC-Adsorbers in einer Regenerierungs-Phase wird die Plasmaquelle, die vorteilhaft während der Filter- bzw. Adsorber-Phase nicht betrieben wird, verwendet. Dabei wird sowohl eine Temperatur im Luftstrom als auch die Stärke des Luftstroms durch den VOC-Adsorber geregelt derart, dass von der Plasmaquelle erzeugtes Oxidationsmittel ausreichend bzw. möglichst gut genutzt wird. Mit der Plasmaquelle werden im Gasstrom und an der Oberfläche des VOC-Adsorbers Oxidationsmittel erzeugt, insbesondere aber OH-Radikale. Die Plasmaquelle kann als Plasmagenerator ausgebildet sein im Wesentlichen entsprechend dem Stand der Technik, vorteilhaft als Hochspannungs-Plasmaquelle. Sie erzeugt das Plasma vorteilhaft nicht-thermisch, also nur durch Hochspannung.

Dabei kann in Weiterbildung der Erfindung vorgesehen sein, dass zu Beginn der Regenerierungs-Phase des VOC-Adsorbers ein geringer Luft- bzw. Volumenstrom eingestellt wird, wobei ein Lüfter odgl., der entweder der Adsorbervorrichtung (H₂O- und VOC-Adsorber) vorgeschaltet ist oder aber Teil der Adsorbervorrichtung ist, auf alle Fälle aber von dieser bzw. einer gleichen Steuerung angesteuert wird, mit relativ geringer Leistung arbeitet. Vorteilhaft beträgt während der Regenerierungs-Phase ein Luft- bzw. Volumenstrom zwischen 0,5% und 2% bis 5% oder 10% dessen, was während der Filter- bzw. Adsorber-Phase durch den VOC-Adsorber strömt.

Eine Temperaturerhöhung dieses Luftstroms wird so eingestellt, dass die Desorption des Wassers aus dem H₂O-Adsorber gut erfolgen kann, also beispielsweise auf 100°C bis 300°C am H₂O-Adsorber. Eine hierfür vorgesehene Heizeinrichtung wird also entsprechend betrieben. Die Temperatur des VOC-Adsorbers wird im Wesentlichen durch die Kondensationsneigung des Wassers darin bestimmt, kann aber niedriger liegen, beispielsweise bei unter 200°C. Die Temperatur muss mindestens so hoch sein, dass extensive Wasserkondensation im VOC-Adsorber vermieden wird, was sich negativ auf die Plasmastabilität auswirken würde. Im Wesentlichen entstehen während der plasma-chemischen Regenerierung des VOC-Adsorbers Wasser und Kohlendioxid als Reaktionsprodukte.

Überschüssiges Wasser, aber auch die in Spuren im Luftstrom noch vorhandenen polaren organischen und anorganischen Reaktionsprodukte mit geringen Dampfdrücken, beispielsweise anorganische Säuren des Schwefels und des Stickstoffs, werden in einer Kondensationsstufe mit einem Kondensator eliminiert, welcher dem VOC-Adsorber nachgeschaltet ist. Anorganische Säuren können durch die Oxidation von schwefel- bzw. stickstoffhaltigen organischen Verbindungen gebildet werden. Ein in der Regel notwendiger Nachfilter hinter dem Kondensator dient der Feinreinigung des Luftstroms während der Regenerierung.

Eine Plasmaspannung an der Plasmaquelle kann zu Beginn der Regenerierungs-Phase, also im zeitlich ersten Drittel oder Viertel, hoch bzw. höher eingestellt werden bzw. die Plasmaquelle wird mit hoher oder höherer Leistung betrieben, um relativ große Mengen an genannten Oxidationsmitteln zu erzeugen. Gegen Ende der Regenerierungs-Phase, insbesondere im zeitlich letzten Drittel oder Viertel, wird dagegen der Luftstrom höher eingestellt, es erfolgt also eine relativ starke Durchströmung des VOC-Adsorbers. Hierfür wird der vorgenannte Ventilator bzw. Lüfter entsprechend angesteuert. Die Temperatur für den Luftstrom kann dann noch höher bzw. relativ hoch eingestellt werden, beispielsweise auf bis zu 350 °C. Die Plasmaspannung dagegen wird niedriger eingestellt, so dass nur eine relativ geringe Menge an Oxidationsmittel erzeugt wird. So kann eine dem Fortschritt der Regenerierung des VOC-Adsorbers angepasste Nutzung der Oxidationsmittel erreicht werden. Des Weiteren kann eine weitgehende bzw. vorteilhaft vollständige Desorption von Wasser vom VOC-Adsorber sichergestellt werden. Somit wird zu Beginn der Regenerierungs-Phase vor allem viel Oxidationsmittel erzeugt und durch den geringen Volumenstrom und die geringe Temperatur befindet sich eine große Menge an Oxidationsmittel im VOC-Adsorber. Das Einstellen der relativ geringen Temperatur bewirkt, dass die VOC noch sorbiert an der Oberfläche des VOC-Adsorbers vorliegen und dort durch das Oxidationsmittel entfernt werden.

Im Laufe der Regenerierungs-Phase bzw. zu ihrem Ende hin ist der Anteil an noch verbleibenden Verunreinigungen stark gesunken. Nun ist es vor allem wichtig, auch sicher alle Bereiche des VOC-Adsorbers mit Oxidationsmittel zu erreichen zur Regenerierung, weswegen der Luftstrom eben hoch eingestellt wird. Dabei kann er vorteilhaft zwischen zweimal und fünfmal bis zehnmal so hoch sein wie zu Beginn der Regenerierung. So kann eine sichere Durchströmung des gesamten VOC-Adsorbers mit Oxidationsmittel erreicht werden. Die Temperatur kann nochmals erhöht werden, und zwar signifikant. Dadurch kann das Entfernen noch vorhandener Verunreinigungen unterstützt werden. Die Plasmaspannung wird relativ niedrig eingestellt, beispielsweise zu 10% bis 30% oder sogar 50% der hohen Plasmaspannung zu Beginn der Regenerierung. Somit erzeugt die Plasmaquelle auch entsprechend weniger Oxidationsmittel, was aber auch nicht mehr in dem Umfang notwendig ist, da ja schon eine teilweise oder weitgehende Reinigung bzw. Regenerierung des VOC-Adsorbers erfolgt ist.

Zusätzlich ist es möglich, nicht nur die Plasmaquelle und den VOC-Adsorber möglichst nahe zusammen anzuordnen, also direkt nebeneinander oder sogar integriert zusammen auszubilden, sondern auch eine Katalysatoreinrichtung räumlich nahe dazu anzuordnen. Dadurch kann eine Regenerierung des VOC-Adsorbers unterstützt werden, insbesondere für den Fall, dass der VOC-Adsorber erwärmt wird. Vorteilhaft wird auf dem VOC-Adsorber eine katalytisch aktive Komponente aufgebracht, wie aus dem Stand der Technik bekannt ist. So kann ein Katalysator in Form von Clustern, also winzig kleinen Kügelchen, auf der inneren Oberfläche des VOC-Adsorbers aufgebracht werden.

Eine Heizeinrichtung, Heizmittel odgl. zum Aufheizen des beide Adsorber durchfließenden Luftstroms können vorteilhaft zusätzlich im Luftstrom vor dem H₂O-Adsorber und/oder dem VOC-Adsorber bzw. am Einlass der Adsorbervorrichtung vorgesehen sein. Sie können zwar relativ nahe an den Adsorbern bzw. der Plasmaquelle angeordnet sein, insbesondere am H₂O-Adsorber. Der Abstand zum VOC-Adsorber kann jedoch so groß sein, dass die Heizmittel hauptsächlich, insbesondere nur, den Luftstrom erwärmen und höchstens darüber indirekt den VOC-Adsorber bzw. die Plasmaquelle. So kann ein zu hoher Energieverbrauch für die Heizmittel vermieden werden. Es ist auch möglich, mehrere Heizmittel im Luftstrom vorzusehen.

Des Weiteren ist es aber auch möglich, den VOC-Adsorber direkt zu beheizen. Aus chemischer Sicht dient diese Möglichkeit für die katalytisch aktive Ausführung des VOC-Adsorbers nicht nur der bei erhöhten Temperaturen effektiveren katalytischen Oxidation der adsorbierten organischen Verbindungen bzw. VOC, sondern vor allem auch der schnelleren Desorption der Oxidationsprodukte bzw. von H₂O vom VOC-Adsorber. Des Weiteren erlaubt eine intelligente Temperatur-Volumenstrom-Steuerung in der Baueinheit aus VOC-Adsorber und Katalysator durch eine graduelle Temperaturerhöhung während der Regenerierung eine Minimierung des Austrags von organischen Zwischenprodukten zu Beginn der Regenerierungs-Phase und eine Maximierung der Desorption von Wasser an deren Ende. Vor allem bewirkt die Erzeugung des Wasserdampfplasmas eine verbesserte Regenerierung des VOC-Adsorbers.

In einer erfindungsgemäßen Erweiterung wird zwischen dem VOC-Adsorber und einem Nachfilter bzw. hinter dem VOC-Adsorber ein Kondensator zur Kondensation organischer Intermediate und Wasser sowie zu deren effektiver Ableitung aus dem Prozess angeordnet. Der Kondensator wird nur während der Regenerierungs-Phase betrieben. Ein dem Kondensator nachgeschalteter Nachfilter dient der Feinreinigung des Gasstroms und wird vorteilhaft nur während der Regenerierungs-Phase durchströmt. Allgemein kann vorteilhaft ein Nachfilter zu Feinreinigung des Gasstroms hinter dem VOC-Adsorber vorgesehen sein.

Ein Ventilator bzw. ein Lüfter zum Erzeugen des Luftstroms kann im Prinzip an beliebiger Stelle im Luftstrom angeordnet sein, nur eben nicht zu nahe an den vorgenannten Heizmitteln, dem VOC-Adsorber oder der Plasmaquelle, um deren Funktion nicht zu beeinträchtigen. Vorteilhaft ist ein Ventilator bzw. Lüfter hinter dem VOC-Adsorber und der Plasmaquelle angeordnet, so dass daran möglichst wenig Verunreinigungen hängen bleiben und deren Teile von den Heizmitteln nicht unnötig mitgeheizt werden müssen.

Während der Regenerierung des VOC-Adsorbers kann in Ausgestaltung der Erfindung die Konzentration gemessen werden von Wasser bzw. Wasserdampf, Sauerstoff, Ozon, den vorgenannten VOC und/oder Kohlendioxid. Diese gemessene Konzentration kann zur Regelung des Luftstroms, der Temperatur und/oder der Plasmaspannung verwendet werden. Eine Messung der Konzentration kann vor dem VOC-Absorber und/oder hinter dem VOC-Adsorber erfolgen, vorteilhaft sowohl davor als auch dahinter. Eine Messung dahinter wird zwar als besonders bedeutsam angesehen, da damit die aus dem VOC-Adsorber bzw. der Adsorbervorrichtung austretende Luft bewertet werden kann. Durch eine Messung davor und dahinter kann aber auch das jeweilige Konzentrationsgefälle im VOC-Adsorber beurteilt werden. Steigt zum Beispiel die VOC-Konzentration im Luftstrom nach dem VOC-Adsorber während der Betriebs-Phase an, so muss die Regenerierungs-Phase gestartet werden. Ist beispielsweise die Konzentration an Kohlendioxid im Luftstrom hinter dem VOC-Adsorber noch relativ hoch, so sollte die Regenerierung länger und/oder intensiver durchgeführt werden. Möglicherweise kann auch die Anfangs-Phase der Regenerierung mit der höheren Erzeugung von Oxidationsmittel verlängert werden für eine verbesserte Regenerierungswirkung durch das Oxidationsmittel. Aufgrund der thermischen Regenerierung des H₂O-Adsorbers kann vorzugsweise ein hoher Wasserdampfanteil von mehr als 50 Vol.-% im Luftstrom erzeugt werden. In einer bevorzugten Variante wird die Zumischung von Frischluft zum Wasserdampf so geregelt, dass im VOC-Adsorber Wasserdampf im großen Überschuss gegenüber Luft vorliegt. Dieser hohe Wasserdampfanteil bewirkt, dass kurzlebige OH-Radikale als hochreaktive Oxidationsmittel durch beispielsweise Elektronenstoß-induzierte Prozesse im Plasma in hoher Konzentration gebildet werden, welche die VOC besonders effektiv oxidieren und damit den VOC-Adsorber besonders schnell regenerieren.

Durch die hohen Feuchtegehalte im Luftstrom kann zudem die häufig zu starke Ozonbildung drastisch vermindert oder sogar komplett vermieden werden. Dies ist in Bezug auf Emissionen in die Raumluft von großer Bedeutung. Die starke Reduzierung des Luftanteils im Luftstrom während der plasma-chemischen Regenerierung des VOC-Adsorbers führt darüber hinaus dazu, dass auch die in der Plasmaquelle unerwünschte Bildung von Stickoxiden aus dem Stickstoff der Luft (N₂ → NOₓ) stark verringert wird.

In einer Ausgestaltung der Erfindung kann beispielsweise durch die vorgenannten Sensoren oder Messeinrichtungen für VOC und/oder Kohlendioxid der Grad der Verunreinigung des VOC-Adsorbers gemessen werden. Sobald dieser einen bestimmten Wert überschreitet, kann eine Regenerierung des VOC-Adsorbers veranlasst werden. Hierzu kann auch ein Luftstrom durch die Adsorbervorrichtung bzw. einen Dunstabzug odgl. vor und hinter dem VOC-Adsorber erfasst werden, wobei aus dem Vergleich der Werte auf die Verunreinigung des VOC-Adsorbers geschlossen werden kann. Eine Regenerierung des VOC-Adsorbers kann dann direkt beginnen außer in dem Fall, dass der Dunstabzug sich gerade in der Betriebs-Phase befindet. Dann bringt die Verwendung des Oxidationsmittels sehr wenig. Es sollte dann bis zu einem Betriebsende des Dunstabzugs gewartet werden. Alternativ kann ein bestimmter günstiger dem Nutzerverhalten angepasster Zeitraum für die Regenerierung verwendet werden, beispielsweise nachts. Dann wird ein Dunstabzug mit sehr hoher Wahrscheinlichkeit nicht benutzt. Des Weiteren stören weder Betriebsgeräusche noch möglicherweise entstehende Geruchsbelästigungen.

Alternativ kann eine zyklische Regenerierung des VOC-Adsorbers vorgesehen sein mit im Wesentlichen festen Zykluszeiten, beispielsweise einmal pro Woche oder einmal pro Monat. Auch hierfür kann gezielt ein vorgenannter günstiger Zeitraum während der Nacht genutzt werden.

In einer nochmals weiteren Alternative ist es möglich, insbesondere wenn keine vorgenannten Sensoren vorgesehen sind, nach einer bestimmten Betriebsdauer des Dunstabzugs eine Regenerierung des VOC-Adsorbers zu starten, vorteilhaft wieder während eines passenden Zeitraums.

Vorteilhaft kann das Oxidationsmittel durch die Plasmaquelle nicht-thermisch bzw. bei niedrigen Temperaturen unter 300°C erzeugt werden, vorzugsweise sogar unter 100°C bzw. ohne explizite gezielte Beheizung. Besonders vorteilhaft kann das Oxidationsmittel durch Hochspannung erzeugt werden, beispielsweise zwischen zwei durch eine dielektrische Barriere getrennte Elektroden, wovon die eine eine Hochspannungselektrode ist und die andere eine geerdete Elektrode. Es wird also kein Lichtbogen odgl. erzeugt. So kann auch die Sicherheit in dem Filter bzw. VOC-Adsorber erhöht werden, da die VOC durchaus auch aufgrund des Fettanteils beim Kochen von Lebensmitteln brennbar sein können. Des Weiteren kann der Energieverbrauch niedrig bleiben.

Der Luftstrom und/oder der VOC-Adsorber können vorteilhaft gezielt erwärmt werden. Dazu bieten sich bevorzugt Widerstandsheizelemente an.

Eine Steuereinrichtung der Adsorbervorrichtung ist vorteilhaft auch eine Steuervorrichtung des gesamten Geräts, zu dem die Adsorbervorrichtung gehört, also beispielsweise des Dunstabzugs bzw. der Küchenabzugshaube oder einer sonstigen Lüftungs- und/oder Reinigungsvorrichtung.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

Weitere Vorteile und Aspekte der Erfindung ergeben sich aus den Ansprüchen und aus der nachfolgenden Beschreibung der bevorzugten Ausführungsbeispiele der Erfindung, die nachfolgend anhand der Figuren erläutert sind. Dabei zeigen:
- Fig. 1: eine erfindungsgemäße Adsorbervorrichtung, mit der das vorbeschriebene Verfahren durchgeführt werden kann, und
- Fig. 2: eine schematische Schnittdarstellung durch eine integrierte Baueinheit aus Adsorber, Katalysator und Plasmaquelle.

### Detaillierte Beschreibung der Ausführungsbeispiele

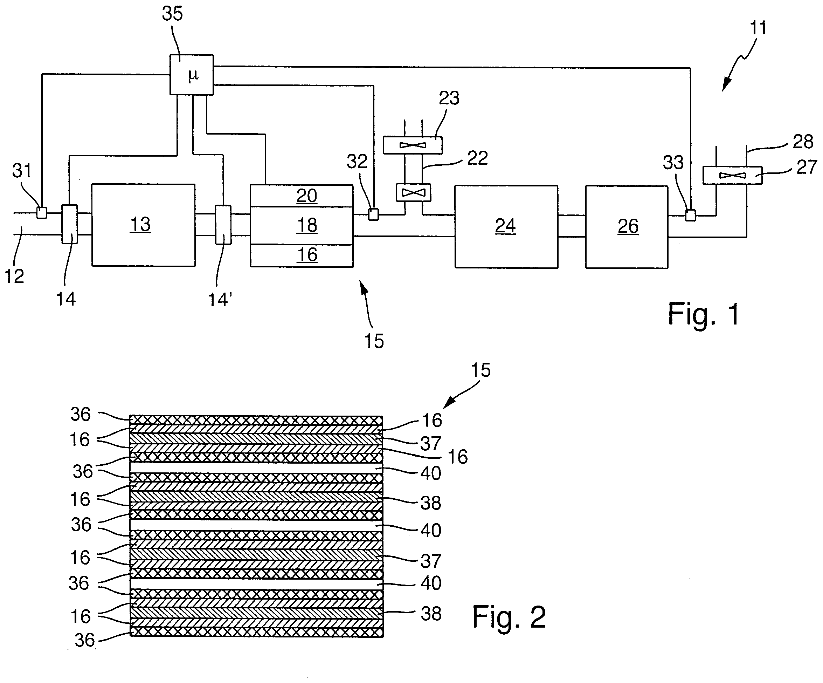

In Fig. 1 ist eine erfindungsgemäße Adsorbervorrichtung 11 schematisch dargestellt, wie sie in Anlagen zur Entlüftung und/oder Luftreinigung eingesetzt werden kann, beispielsweise in einem Dunstabzug bzw. einer Küchenabzugshaube an oder über einem Kochgerät. Dazu kann die gesamte Adsorbervorrichtung 11 in einem entsprechenden Gehäuse angeordnet sein, was für den Fachmann aber leicht realisierbar ist.

Die Adsorbervorrichtung 11 weist einen Einlass 12 für zu reinigende Luft auf. Dieser Einlass 12 führt über eine Vor-Heizung 14 in einen ersten H₂O-Adsorber 13, der zur Trocknung der zu reinigenden Luft dient und zur Ansammlung von Wasser für die anschließende Verwendung. Dann geht der Luftstrom weiter an einer Heizung 14' vorbei, die nachfolgend noch beschrieben ist, da sie für die Regenerierungs-Phase benötigt wird.

Danach kommt eine Baueinheit 15, wie sie eingangs erläutert worden ist, die den hauptsächlichen Adsorber 16 aufweist, der als VOC-Adsorber ausgebildet ist. Der vorgenannte H₂O-Adsorber 13 ist vorteilhaft hydrophil ausgebildet, beispielsweise mit NaX-Zeolith. Der VOC-Adsorber 16 ist vorteilhaft hydrophob ausgebildet, beispielsweise mit USY-Zeolith, wobei sein Adsorbermaterial besonders vorteilhaft oxidationsresistent ist. Beide Adsorber sollten temperaturbeständig sein, bevorzugt bis mindestens 300°C oder bis 400°C. Platten-, waben- oder schaumartige Adsorberstrukturen sind zu bevorzugen, besonders die plattenförmigen Adsorberstrukturen.

Beim Prozess der Adsorption, der der normalen Betriebs-Phase eines Dunstabzugs bzw. der Adsorbervorrichtung 11 entspricht, durchströmt der zu reinigende Luftstrom die zwei räumlich voneinander getrennten Adsorberstufen. Dabei dient der H₂O-Adsorber 13 der Trocknung des Luftstroms und der Sammlung von Wasser, während der VOC-Adsorber die geruchsintensiven Bestandteile, insbesondere VOC-Bestandteile, durch Adsorption aus dem Luftstrom entfernt. Die gereinigte Luft wird mittels eines Ventilators 23 am Abzweig 22 ausgeblasen. Die Trocknung des zu reinigenden Luftstroms dient dem Schutz des VOC-Adsorbers 16 vor Wasserkondensation und Porenverstopfung. Der Prozess der Adsorption verläuft bei Umgebungstemperatur mit großem Volumenstrom durch den Ventilator 23, wobei große Volumenströme von bis zu 1000 m³/h durch die beiden Adsorber 13 und 16 geleitet werden können. Der Ventilator 23 sollte eine entsprechende Leistung aufweisen, wie man dies beispielsweise von Dunstabzügen kennt. Dabei ist eine Plasmaquelle 20 inaktiv.

Eine Besonderheit liegt hier in Bezug auf die Betriebs-Phase in einer räumlich getrennten Adsorption von Wasser und VOC-Bestandteilen. Damit verringert man ganz wesentlich die negativen Effekte einer konkurrierenden Adsorption von Wasser und VOC-Bestandteilen an einem einzigen Adsorber. Diese konkurrierende Adsorption führt besonders bei dem bei Kochvorgängen sehr häufig auftretendem hohen Wassergehalt des zu reinigenden Luftstroms nach dem Stand der Technik dazu, dass Wasser die adsorbierten VOC-Bestandteile verdrängt und so die Adsorptionskapazität des VOC-Adsorbers für VOC verringert. Gleichzeitig kann der VOC-Adsorber durch kondensierendes Wasser verstopft und so die Adsorption verschlechtert bzw. gänzlich blockiert werden.

Der VOC-Adsorber 16 weist vorteilhaft einen hier schematisch getrennt dargestellten Katalysator 18 mit einer katalytisch aktiven Komponente auf, besonders vorteilhaft als vorgenannte Cluster bzw. winzig kleine Kügelchen auf der inneren Oberfläche des VOC-Adsorbers. Diese katalytisch aktive Komponente wirkt als Oxidationskatalysator und ist vorteilhaft vergiftungsresistent gegenüber schwefelhaltigen Verbindungen. Dafür können beispielsweise Mischmetalloxide verwendet werden.

Schließlich ist in einer Baueinheit 15 mit dem VOC-Adsorber 16 samt Katalysator 18 noch die vorgenannte Plasmaquelle 20 enthalten. Sie kann grundsätzlich auf bekannte Art und Weise ausgebildet sein, eben als Baueinheit mit vor allem dem VOC-Adsorber 16, so dass die Plasmaquelle 20 darin integriert sein kann. Dies bedeutet sehr kurze Wege und somit sehr kurze Zeitdauern, bis von der Plasmaquelle 20 erzeugte Oxidationsmittel die Oberfläche des VOC-Adsorbers 16 erreichen, um dort die entsprechenden Verunreinigungen bzw. VOC-Bestandteile entfernen zu können. Vorteilhaft weist die Plasmaquelle 20 eine dielektrische Barrierenentladung auf, wozu sie ein entsprechendes Dielektrikum aufweist. Hinter der Baueinheit 15 ist der Abzweig 22 für den Luftstrom vorgesehen, der verschließbar ausgebildet ist. Wird die Adsorbervorrichtung rein zur adsorptiven Luftreinigung eingesetzt, so kann beim Abzweig 22 sämtliche gereinigte Luft mittels des Ventilators 23 ausgeblasen werden.

Während der Regenerierungs-Phase ist dieser Abzweig 22 geschlossen, und der Luftstrom geht weiter in einen Kondensator 24. Dahinter kommt ein sogenannter Nachfilter 26, auch Polizeifilter genannt, der Aktivkohlematerialien oder auch mineralische, hydrophobe Adsorber wie beispielsweise Zeolith aufweisen kann. Er kann auch als Schüttbettreaktor ausgelegt sein, da er nur während der Regenerierungs-Phase von einem vorteilhaft geringen Luftstrom durchströmt wird. Auch hier können katalytisch aktive Komponenten enthalten sein.

Hinter dem Nachfilter 26 ist ein Lüfter 27 vorgesehen, der während der Regenerierungs-Phase den Luftstrom zum Einlass 12 ansaugt. Insofern muss der Lüfter 27 nur für den dort vorgesehenen geringen Luftstrom ausgelegt sein. Dieser Luftstrom tritt dann am Auslass 28 aus.

Des Weiteren sind an der Adsorbervorrichtung 11 Sensoren 31, 32 und 33 vorgesehen. Diese erfassen einen Anteil an abzureinigenden Komponenten, insbesondere die vorgenannten VOC und H₂O, und zwar am Einlass 12 der Sensor 31, hinter der Baueinheit 15 der Sensor 32 und hinter dem Nachfilter 26 der Sensor 33. Die Sensoren 31, 32 und 33 sind mit einer Steuerung 35 verbunden, die, wie dargestellt, auch die Heizungen 14 und 14' ansteuert. Des Weiteren steuert die Steuereinrichtung 35 auch den Ventilator 23 und den Lüfter 27 an sowie vor allem die Plasmaquelle 20.

Auf zuvor beschriebene Art und Weise kann in bestimmten Abständen oder bedarfsweise nach Reinigung von Luft vor allem der VOC-Adsorber 16 regeneriert werden mittels der Plasmaquelle 20. Dazu ist es unter anderem auch möglich, mittels der dargestellten Heizungen 14 und/oder 14' oder auch weiterer Heizungen, den Temperaturverlauf vor allem im H₂O-Adsorber zur Desorption des Wassers, und in der Baueinheit 15 einzustellen, aber auch am Kondensator 24 und am Nachfilter 26. Über entsprechende Ansteuerung des Lüfters 27 kann die Menge des Luftstroms eingestellt werden. Schließlich kann die Steuereinrichtung 35 auch die Plasmaquelle 20 steuern, um die Menge an erzeugtem Oxidationsmittel einzustellen.

Die Fig. 2 zeigt einen schematischen Schnitt durch die Baueinheit 15 aus Adsorber bzw. VOC-Adsorber 16 und Plasmaquelle 20, die schichtweise dargestellt sind. Der VOC-Adsorber 16 trägt eine katalytisch aktive Komponente bzw. ist mit dieser auf bekannte Art und Weise beschichtet, so dass dieser Katalysator nicht separat dargestellt ist. Die oberste Schicht wird von einem eingangs beschriebenen Dielektrikum 36 für eine dielektrische Barrierenentladung gebildet. Das Dielektrikum 36 kann als konstruktiver Aufbau mit dem VOC-Adsorber 16 ein Grundgerüst für einen Wabenaufbau der Baueinheit 15 bilden, auch wenn hier eine Plattenstruktur dargestellt ist.

Zwischen zwei Schichten des VOC-Adsorbers 16 ist eine Hochspannungselektrode 37 angeordnet. Darunter ist dann noch einmal eine Schicht Dielektrikum 36 angeordnet. Unter diesem Schichtaufbau ist ein Gaskanal 40 vorgesehen für den Luftstrom, der die Baueinheit 15 durchströmt.

Unter dem Gaskanal 40 ist ein weiterer Schichtaufbau ähnlich wie zuvor beschrieben angeordnet, allerdings mit einer geerdeten Elektrode 38 anstelle der Hochspannungselektrode 37. Dann kommt wieder ein Gaskanal 40, und so weiter.

Unter der Vielzahl der Reaktorvarianten für die Plasmaquelle 20 bietet eine dielektrische Barrierenentladungsanordnung mit dem Dielektrikum 36 die größte Betriebssicherheit in Bezug auf die Vermeidung elektrischer Durchschläge und damit verbundener möglicher Kurzschlüsse und Hot Spots. Ein zweites Kriterium besteht darin, dass vorzugsweise das gesamte Adsorbervolumen von der durch das Plasma gebildeten Entladungszone erfasst wird. Deswegen ist die Bauform als integrierte Baueinheit besonders vorteilhaft.

Die beschriebenen Varianten der dielektrischen Barrierenentladung können mit einer Hochspannung mit einer Frequenz von 50 Hz betrieben werden, möglicherweise auch mit einer gepulsten Hochspannungsquelle mit Frequenzen im Kilohertz-Bereich. Des Weiteren können kapazitiv oder induktiv eingekoppelte Radio- und Mikrowellenplasmen im hohen Frequenzbereich von Megahertz bis Gigahertz verwendet werden, welche größere Mengen an Oxidationsmitteln erzeugen können. Für diese Variante würden die Elektroden entsprechend dem Stand der Technik außerhalb der VOC-Adsorbereinheit angebracht, und das Plasma induktiv bzw. kapazitiv in den VOC-Adsorber eingekoppelt.

Alternativ zu einem solchen Schichtaufbau der Baueinheit für VOC-Adsorber und Plasmaquelle kann auch eine Nadelgeometrie der Elektroden 37 und 38 gewählt werden, wie sie beispielsweise aus der von derselben Anmelderin eingereichten europäischen Patentanmeldung EP 14165365.9 vom 22. April 2014 hervorgeht.

Das aus dem H₂O-Adsorber 13 thermisch desorpierte Wasser wird in der Regenerierungs-Phase als Wasserdampf in die Baueinheit 15 gebracht und dort mittels der Plasmaquelle in OH-Radikale umgewandelt. Zusätzlich können weitere reaktive Plasmaspezies mittels der Plasmaquelle erzeugt werden wie beispielsweise O-Radikale und Ozon. Durch die große räumliche Nähe zum zu reinigenden VOC-Adsorber 16 wird dieses Oxidationsmittel genau dort erzeugt wo es benötigt wird. So kann es auch während seiner kurzen Lebensdauer gut wirken.

## Patentansprüche

1. Verfahren zur Regenerierung eines VOC-Adsorbers (16), wobei der VOC-Adsorber integral mit mindestens einer Plasmaquelle (20) als Baueinheit (15) ausgebildet ist und wobei vor dem VOC-Adsorber (16) ein H₂O-Adsorber (13) angeordnet ist, mit den Schritten:
- der VOC-Adsorber (16) wird von einem gesteuerten Luftstrom durchströmt,
- mittels der Plasmaquelle (20) wird nicht-thermisch Oxidationsmittel erzeugt unter Verwendung einer Hochspannung,
- während einer Betriebs-Phase mit Adsorption werden an dem VOC-Adsorber (16) Verunreinigungen und/oder VOC-Bestandteile adsorbiert,
- während der Betriebs-Phase wird mittels des H₂O-Adsorbers (13) Wasser aus dem zu reinigenden Luftstrom adsorbiert,
- während einer Regenerierungs-Phase des VOC-Adsorbers (16) wird Wasser aus dem H₂O-Adsorber (13) desorbiert und zum VOC-Adsorber geleitet,
- während der Regenerierungs-Phase werden im VOC-Adsorber (16) mittels der Plasmaquelle (20) durch plasma-chemische Wasserspaltung OH-Radikale erzeugt zur verbesserten Regenerierung des VOC-Adsorbers (16).

2. Verfahren nach Anspruch 1, **dadurch gekennzeichnet, dass** die Konzentration mindestens eines Stoffs aus der folgenden Gruppe: O₂, O₃, H₂O, VOC oder CO₂ gemessen wird, wobei die gemessene Konzentration zur Regelung des Volumenstroms, der Temperatur und/oder der Hochspannung verwendet wird.

3. Verfahren nach Anspruch 1 oder 2, **dadurch gekennzeichnet, dass** das Oxidationsmittel nicht-thermisch erzeugt wird, insbesondere bei Temperaturen unter 300°C, vorzugsweise bei Temperaturen unter 100°C.

4. Verfahren nach einem der vorhergehenden Ansprüche, **dadurch gekennzeichnet, dass** der Luftstrom und/oder der VOC-Adsorber (16) gezielt erwärmt werden, vorzugsweise mittels Widerstandsheizelementen (14').

5. Verfahren nach einem der vorhergehenden Ansprüche, **gekennzeichnet durch** einen zyklischen Betrieb zur zyklischen Regenerierung des VOC-Adsorbers (16).

6. Verfahren nach einem der vorhergehenden Ansprüche, **dadurch gekennzeichnet, dass** der H₂O-Adsorber (13) und/oder der VOC-Adsorber (16) und/oder die Plasmaquelle (20) erwärmt werden, insbesondere auf eine im Vergleich zur Betriebs-Phase des VOC-Adsorbers (16) erhöhte Temperatur.

## Claims

1. Method for regenerating a VOC adsorber (16), wherein the VOC adsorber is constructed integrally with at least one plasma source (20) as a structural unit (15), and wherein an H₂O adsorber (13) is arranged upstream of the VOC adsorber (16), comprising the steps:
- a controlled airstream flows through the VOC adsorber (16),
- by means of the plasma source (20), oxidizing agent is generated non-thermally with use of a high voltage,
- during an adsorption as operating phase, impurities and/or VOC constituents are adsorbed on the VOC adsorber,
- during the operating phase, water is adsorbed by means of the H₂O adsorber (13) from the airstream that is to be purified,
- during a regeneration phase of the VOC adsorber (16), water is desorbed from the H₂O adsorber (13) and passed to the VOC adsorber,
- during the regeneration phase, in the VOC adsorber (16), by means of the plasma source (20), by plasma-chemical water cleavage, OH free radicals are generated for improved regeneration of the VOC adsorber (16).

2. Method according to Claim 1, **characterized in that** the concentration of at least one material from the following group: O₂, O₃, H₂O, VOC or CO₂ is measured, wherein the measured concentration is used for controlling the volumetric flow rate, the temperature and/or the high voltage.

3. Method according to Claim 1 or 2, **characterized in that** the oxidizing agent is generated non-thermally, in particular at temperatures below 300°C, preferably at temperatures below 100°C.

4. Method according to any one of the preceding claims, **characterized in that** the airstream and/or the VOC adsorber (16) are heated in a targeted manner, preferably by means of resistance heating elements (14').

5. Method according to any one of the preceding claims, **characterized by** a cyclic operation for the cyclic regeneration of the VOC adsorber (16).

6. Method according to any one of the preceding claims, **characterized in that** the H₂O adsorber (13) and/or the VOC adsorber (16) and/or the plasma source (20) are heated, in particular to a temperature that is elevated in comparison with the operating phase of the VOC adsorber (16).

## Revendications

1. Procédé pour la régénération d'un adsorbant de COV (16), l'adsorbant de COV étant conçu d'une seule pièce avec au moins une source de plasma (20) sous forme de module (15) et un adsorbant de H₂O (13) étant disposé en amont de l'adsorbant de COV (16), présentant les étapes :
- l'adsorbant de COV (16) est traversé par un flux d'air régulé,
- au moyen de la source de plasma (20), un agent d'oxydation est généré de manière non thermique à l'aide d'une haute tension,
- pendant une phase de fonctionnement avec de l'adsorption, l'adsorbant de COV (16) adsorbe des impuretés et/ou des constituants de COV,
- pendant la phase de fonctionnement, l'adsorbant de H₂O (13) adsorbe de l'eau du flux d'air à purifier,
- pendant une phase de régénération de l'adsorbant de COV (16), de l'eau est désorbée de l'adsorbant de H₂O (13) et guidée vers l'adsorbant de COV,
- pendant la phase de régénération, des radicaux OH sont générés dans l'adsorbant de COV (16) au moyen de la source de plasma (20) par une dissociation plasma-chimique de l'eau pour une régénération améliorée de l'adsorbant de COV (16).

2. Procédé selon la revendication 1, **caractérisé en ce que** la concentration en au moins une substance du groupe suivant : O₂, O₃, H₂O, COV ou CO₂ est mesurée, la concentration mesurée étant utilisée pour la régulation du flux volumique, de la température et/ou de la haute tension.

3. Procédé selon la revendication 1 ou 2, **caractérisé en ce que** l'agent d'oxydation est généré de manière non thermique, en particulier à des températures inférieures à 300°C, de préférence à des températures inférieures à 100°C.

4. Procédé selon l'une quelconque des revendications précédentes, **caractérisé en ce que** le flux d'air et/ou l'adsorbant de COV (16) sont chauffés de manière ciblée, de préférence au moyen d'éléments chauffants à résistance (14').

5. Procédé selon l'une quelconque des revendications précédentes, **caractérisé par** un fonctionnement cyclique pour la régénération cyclique de l'adsorbant de COV (16).

6. Procédé selon l'une quelconque des revendications précédentes, **caractérisé en ce que** l'adsorbant de H₂O (13) et/ou l'adsorbant de COV (16) et/ou la source de plasma (20) sont chauffés, en particulier à une température augmentée par rapport à celle de la phase de fonctionnement de l'adsorbant de COV (16).
